# EUROPEAN PATENT SPECIFICATION

(11) **EP 4 388 791 B1**
(45) Date of publication and mention of the grant of the patent: **18.11.2026**
(21) Application number: 21953684.4
(22) Date of filing: 17.08.2021
(51) Int. Cl.: H04W 52/02, H04W 88/08

(54) **METHODS AND APPARATUSES FOR JOINT OPTIMIZATION OF POWER SAVING FOR RADIO UNIT**
VERFAHREN UND VORRICHTUNGEN ZUR GEMEINSAMEN OPTIMIERUNG DER ENERGIEEINSPARUNG FÜR EINE FUNKEINHEIT
PROCÉDÉS ET APPAREILS D'OPTIMISATION CONJOINTE D'ÉCONOMIE D'ÉNERGIE POUR UNITÉ RADIO

(43) Date of publication of application: 26.06.2024
(73) Proprietor: Telefonaktiebolaget LM Ericsson (publ), 164 83 Stockholm (SE)
(72) Inventor: ZHANG, Qi, Beijing 100102 (CN); YUAN, Changqing, Beijing 100102 (CN); ZHANG, Fan, Beijing 100102 (CN)
(74) Representative: Ericsson
(86) International application number: PCT/CN2021/113028
(87) International publication number: WO 2023/019433

(56) References cited:
- WO-A1-2017/095279
- CN-A- 104 982 075
- CN-A- 111 511 003
- CMCC: "AI based Energy Saving", vol. RAN WG3, no. electronic; 20210517 - 20210528, 7 May 2021 (2021-05-07), XP052002554, Retrieved from the Internet <URL:https://ftp.3gpp.org/tsg_ran/WG3_Iu/TSGR3_112-e/Docs/R3-212507.zip R3-212507 AI based Energy Saving.doc> [retrieved on 20210507]
- ERICSSON: "On Support of Multiple DL Data Transmission Starting Points", 3GPP DRAFT; R1-156047, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Malmo, Sweden; 20151005 - 20151009, 4 October 2015 (2015-10-04), Mobile Competence Centre ; 650, route des Lucioles ; F-06921 Sophia-Antipolis Cedex ; France , XP051039810
- ANONYMOUS: "Future technology trends of terrestrial IMT systems", ITU-R M.2320-0, 1 November 2014 (2014-11-01), XP055596494, Retrieved from the Internet <URL:https://www.itu.int/dms_pub/itu-r/opb/rep/R-REP-M.2320-2014-PDF-E.pdf> [retrieved on 20190614]

## Description

### TECHNICAL FIELD

The non-limiting and example embodiments of the present disclosure generally relate to the technical field of mobile communication network, and specifically to methods and apparatuses for joint optimization of power saving for a Radio Unit in the mobile communication network.

### BACKGROUND

This section introduces aspects that may facilitate a better understanding of the disclosure. Accordingly, the statements of this section are to be read in this light and are not to be understood as admissions about what is in the prior art or what is not in the prior art.

A base station in a mobile communication network may involves a Radio Unit (RU), which is responsible for e.g., transmitting and receiving radio signals, and a Digital Unit (DU), which is responsible for e.g., digitally processing the radio signals.

With the rapid development of mobile communication, power consumption of a mobile communications system, especially power consumption of a base station in the mobile communications system, attracts more attention in the industry. In the power consumption of the base station, power consumption of the RU accounts for a main part. The RU may execute various Energy Efficiency (EE) functionalities normally determined by the DU to save power.

As energy-conserving is playing an increasingly significant role, more and more EE functionalities may be executed inside the RU. Developing EE functionalities is like building blocks, the situation becomes more and more complex, since different EE functionalities relate to different trigger conditions, lead time and recovery time of various device components, Key Performance Indicator (KPI) impacts and power saving capacity etc. Moreover, the interdependence of those factors is prominent.

Then, consequent problems are what is the best combination of these functionalities according to actual site condition and how to make the RU to reach the lowest or excellent power consumption level case by case, which are being overlooked.

D1 (CMCC, "AI based Energy Saving", 3GPP DRAFT; R3-212507; 2021-05-28) discloses that a gNB reports energy saving related data to the OAM, the OAM forwards the output data, including energy saving solution, to related neighbouring gNBs.

D2 (WO2017095279A1) discloses a method and a power determination unit of a Radio Base Station Controller enabling energy savings in a radio base station, in Digital Unit or radio unit comprising radio devices for handling radio telecommunication traffic and a radio traffic scheduler for scheduling the radio telecommunication traffic and providing the power determination unit with radio traffic information for a coming time interval, said radio devices being power supplied by at least one power converter and power supply unit for powering said power converters.

### SUMMARY

The present invention is defined by the appended independent claims, to which reference should now be made.

Currently, to reduce the power consumption of the RU, a workaround or experience value may be used for each of the EE functionalities to be executed. However, strictly speaking, it is inappropriate and always unable to achieve the best power consumption of the RU.

The inventors of the present disclosure find, operation conditions and behaviour of each base station on site are totally discrepant, even when they have the same hardware (HW) type. For example, different ambient temperature, humidity, traffic load and influence of partial HW malfunction and so on may lead to a different power consumption of the RU, and most of them are easier obtained by the RU rather than the DU.

The inventors of the present disclosure also find, a number of influencing factors from the higher tiers (L2, L3 even O&M and OSS (Operation Support Systems)), such as cell load, network performance and restrictions of scheduling strategy, may also affect power consumption of the RU in a base station.

One of the objects of the present disclosure is to resolve or alleviate the above problem.

The inventors of the present disclosure conceive of systemizing and defining an effective energy performance orchestration (a joint-optimization power saving solution) by jointly considering at least internal information of the RU, and internal information of the DU (sometimes further considering e.g., higher layer information), to further reduce the power consumption of the RU.

In addition, to make the power saving solution more flexible, the inventors of the present disclosure further conceive of dividing the EE functionalities into a plurality of domains, for example, four domains including time domain, frequency domain, space domain and amplitude domain, whereby one or more domains and one or more corresponding domain indicators may be specified in the power saving solution to the RU (without needing to specify the specific EE functionalities to be executed by the RU), and the RU may choose one or more EE functionalities to be executed by itself from the one or more domains based on one or more corresponding domain indicators, which gives the RU greater flexibility in choosing EE functionalities to be executed.

According to a first aspect of the present disclosure, the object is achieved by a method performed by a DU for reducing the power consumption of a RU, wherein the RU and the DU cooperate to provide radio services, the method including the following steps: obtaining a power saving solution which is based on at least internal information of the RU and internal information of the DU; sending the power saving solution to the RU in order for the RU to execute one or more corresponding EE functionalities based on the power saving solution; and performing related power saving processing, in response to an acknowledgement for the power saving solution from the RU.

According to a second aspect of the present disclosure, the object is achieved by a DU for reducing the power consumption of a RU, wherein the RU and the DU cooperate to provide radio services, the DU including: a obtaining component, for obtaining a power saving solution which is based on at least internal information of the RU and internal information of the DU; a sending component, for sending the power saving solution to the RU in order for the RU to execute one or more corresponding EE functionalities based on the power saving solution; and a performing component, for performing related power saving processing, in response to an acknowledgement for the power saving solution from the RU.

According to a third aspect of the present disclosure, the object is achieved by a DU for reducing the power consumption of a RU, wherein the RU and the DU cooperate to provide radio services, the method including: a processor; and a memory, having stored instructions that when executed by the processor cause the DU to: obtain a power saving solution which is based on at least internal information of the RU and internal information of the DU; send the power saving solution to the RU in order for the RU to execute one or more corresponding EE functionalities based on the power saving solution; and perform related power saving processing, in response to an acknowledgement for the power saving solution from the RU

According to a fourth aspect of the present disclosure, the object is achieved by a machine readable medium having stored thereon instructions that when executed on a DU cause the DU to perform the method according to the first aspect.

According to a fifth aspect of the present disclosure, the object is achieved by a method performed by a RU for reducing power consumption of the RU, wherein the RU and a DU cooperate to provide radio services, the method including the following steps: receiving, from the DU, a power saving solution which is based on at least internal information of the RU and internal information of the DU; sending an acknowledgement for the power saving solution to the DU; and executing one or more corresponding EE functions based on the power saving solution.

According to a sixth aspect of the present disclosure, the object is achieved by a RU for reducing power consumption of the RU, wherein the RU and a DU cooperate to provide radio services, the RU including: a receiving component, for receiving, from the DU, a power saving solution which is based on at least internal information of the RU and internal information of the DU; and a sending component, for sending an acknowledgement for the power saving solution to the DU; and an executing component, for executing one or more corresponding EE functions based on the power saving solution.

According to a seventh aspect of the present disclosure, the object is achieved by a RU for reducing power consumption of the RU, wherein the RU and a DU cooperate to provide radio services, the RU including: a processor; and a memory, having stored instructions that when executed by the processor cause the RU to: receive, from the DU, a power saving solution which is based on at least internal information of the RU and internal information of the DU; send an acknowledgement for the power saving solution to the DU; and execute one or more corresponding EE functions based on the power saving solution

According to an eighth aspect of the present disclosure, the object is achieved by a machine readable medium having stored thereon instructions that when executed on a RU cause the RU to perform the method according to the fifth aspect.

### BRIEF DESCRIPTION OF THE DRAWINGS

The above and other aspects, features, and benefits of the present disclosure will become more fully apparent from the following detailed description with reference to the accompanying drawings, in which like reference numerals or letters are used to designate like or equivalent elements. The drawings are illustrated for facilitating better understanding of the embodiments of the disclosure and not necessarily drawn to scale, in which:
Figure 1 illustrates flowchart of the method performed by a DU for reducing the power consumption of a RU according to the present disclosure;
Figure 2 illustrates flowchart of the method performed by a RU for reducing the power consumption of the RU according to the present disclosure;
Figure 3 illustrates a first example situation where the DU and the RU perform their methods respectively according to the present disclosure;
Figure 4 illustrates a second example situation where the DU and the RU perform their methods respectively according to the present disclosure;
Figure 5 illustrates a third example situation where there are two DUs, and the DUs and the RU perform their methods respectively according to the present disclosure;
Figure 6 illustrates flowchart of a process of the RU for changing the current power saving solution according to the present disclosure;
Figure 7 is a schematic block diagram of a DU according to the present disclosure.
Figure 8 is a schematic block diagram of a RU according to the present disclosure.
Figure 9 is another schematic block diagram of a DU according to the present disclosure.
Figure 10 is another schematic block diagram of a RU according to the present disclosure.

### DETAILED DESCRIPTION

Embodiments herein will be described more fully hereinafter with reference to the accompanying drawings. The embodiments herein may, however, be embodied in many different forms and should not be construed as limiting the scope of the appended claims.

The terminology used herein is for the purpose of describing particular embodiments only and is not intended to be limiting. As used herein, the singular forms "a", "an" and "the" are intended to include the plural forms as well, unless the context clearly indicates otherwise. It will be further understood that the terms "comprises" "comprising," "includes" and/or "including" when used herein, specify the presence of stated features, integers, steps, operations, elements, and/or components, but do not preclude the presence or addition of one or more other features, integers, steps, operations, elements, components, and/or groups thereof.

Also, use of ordinal terms such as "first," "second," "third," etc., herein to modify an element does not by itself connote any priority, precedence, or order of one element over another or the temporal order in which acts of a method are performed, but are used merely as labels to distinguish one element having a certain name from another element having a same name (but for use of the ordinal term) to distinguish the elements.

Unless otherwise defined, all terms (including technical and scientific terms) used herein have the same meaning as commonly understood. It will be further understood that terms used herein should be interpreted as having a meaning that is consistent with their meaning in the context of this specification and the relevant art and will not be interpreted in an idealized or overly formal sense unless expressly so defined herein.

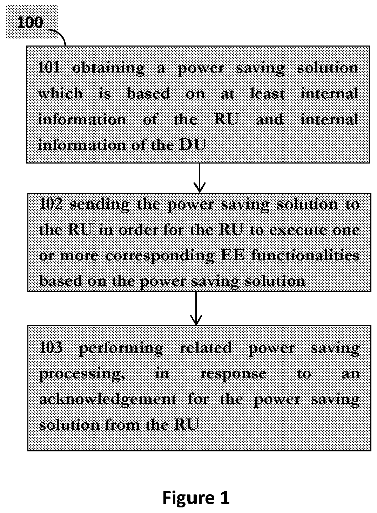

A flowchart of a method 100 performed by a DU for reducing the power consumption of a RU is shown in figure 1, wherein the RU and the DU cooperate to provide radio services. The method 100 includes the following steps: a step 101 of obtaining a power saving solution which is based on at least internal information of the RU and internal information of the DU; a step 102 of sending the power saving solution to the RU in order for the RU to execute one or more corresponding Energy Efficiency, EE, functionalities based on the power saving solution; and a step 103 of performing related power saving processing, in response to an acknowledgement for the power saving solution from the RU.

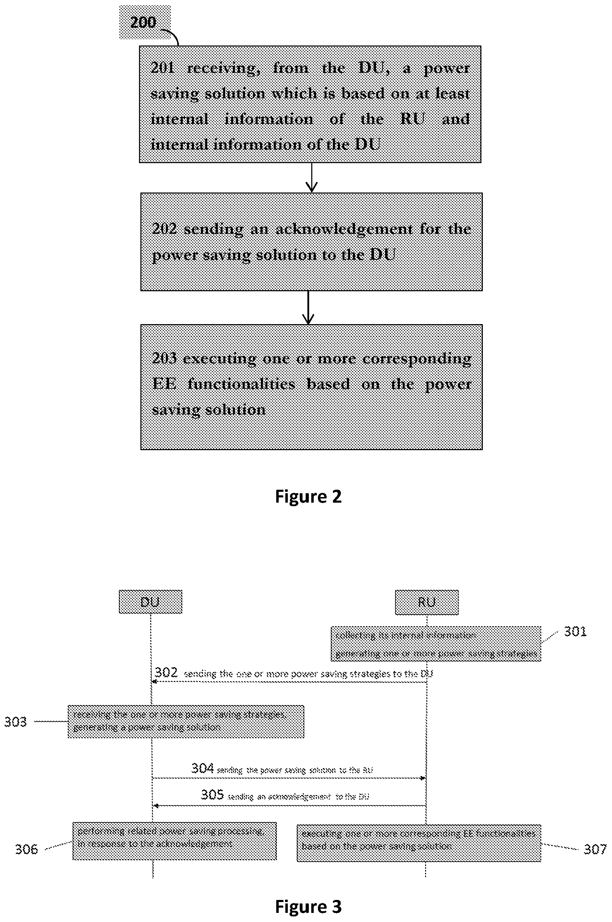

A flowchart of a method 200 performed by a RU for reducing power consumption of the RU is shown in figure 2, wherein the RU and a DU cooperate to provide radio services. The method 200 includes the following steps: a step 201 of receiving, from the DU, a power saving solution which is based on at least internal information of the RU and internal information of the DU; a step 202 of sending an acknowledgement for the power saving solution to the DU; and a step 203 of executing one or more corresponding EE functionalities based on the power saving solution.

Both the DU and the RU can be implemented as a network element on a dedicated hardware, as a software instance or a firmware running on a hardware, as a virtualized function instantiated on an appropriate platform (e.g. on a cloud infrastructure), or as any combination thereof.

In an embodiment, the power saving solution may include the follow items: a trigger condition for triggering the power saving solution, a starting time for starting the power saving solution, a duration for executing the power saving solution, and EE function(s) to be performed by the RU.

In order to make the power saving solution more flexible, the inventors of the present disclosure further conceive of dividing the EE functionalities into a plurality of domains, for example, four domains including time domain, frequency domain, space domain and amplitude domain, whereby one or more domains and one or more corresponding domain indicators may be specified in the power saving solution to the RU (without needing to specify the specific EE functionalities to be executed by the RU), and the RU may choose one or more EE functionalities to be executed by itself from the one or more domains based on one or more corresponding domain indicators, which gives the RU greater flexibility in choosing EE functionalities to be executed.

Each of the EE functionalities may be divided into only one domain. The following is example rules for dividing the EE functionalities into the four example domains:
- Time domain: Device components can be set to OFF or Sleep mode when there is no data transmission in a symbol, slot, or other longer durations.
- Frequency domain: Bandwidth and relative radio resources in frequency domain can be limited or shutdown (disabled) during low traffic loads.
- Space domain: Branches of radio can be muted when traffic load is relatively low.
- Amplitude domain: Output power of the Power Amplifier (PA) can be scaled up and down per different requirements and temperatures.

Of course, persons skilled in the art can design more or less domains or different domains according to teachings of the present disclosure and in view of the particular scenario where the solution of the present disclosure is applied.

When one or more domains are specified in the power saving solution, one or more domain indicators respectively corresponding to the one or more domains should also be specified in the power saving solution. For example, a percentage may be specified for each of the four domains, e.g., X% may be specified for the time domain, which means duty ratio of time domain within a scheduling cycle, Y% may be specified for the frequency domain, which means compression ratio or PRB (Physical Resource Block, or smaller granularity) restraints in frequency domain, W% may be specified for the space domain, which means branch/antenna mute ratio in space domain, and Z% may be specified for the amplitude domain, which means scaling ratio in amplitude domain (output power). Persons skilled in the art will understand other domain indicators may instead be specified for the domains, in order for the RU to choose one or more EE functionalities from one or more domains specified in the power saving solution.

Therefore, in another embodiment, the power saving solution may include the following items: a trigger condition for triggering the power saving solution, a starting time for starting the power saving solution, a duration for executing the power saving solution, one or more domains in a plurality of domains to which EE functionalities belong, and one or more domain indicators respectively corresponding to the one or more domains.

In an embodiment, some or all domains will be included in the power saving solution, however the DU will ignore any domain whose domain indicator has an invalid value (e.g., a negative percentage), when choosing one or more EE functionalities to be executed.

After receiving the power saving solution, the RU should send an acknowledgement for the power saving solution to the DU, to demonstrate the power saving solution is correctly received by the RU. If there is no acknowledgement from the RU is received in the DU in a period of time, the DU may resend the power saving solution to the RU, or report an error to the operator depending on specific implementation.

After sending the acknowledgement, the RU may directly execute one or more EE functionalities if the one or more functionalities are included in the power saving solution, or first choose one or more EE functionalities from one or more domains based on one or more corresponding domain indicators, then execute the one or more EE functionalities, if the one or more domains and the one or more corresponding domain indicators are included in the power saving solution.

In response to the acknowledgement from the RU, the DU should perform related power saving processing if there is no KPI impact or within the tolerance, including e.g., performing a data scheduling to the RU according to the power saving solution. As an example, if the time domain with its domain indicator 40% and the frequency domain with its domain indicator 50% are included in the power saving solution, the DU should perform a data scheduling in 40% of the time period and in 50% of the frequency scope to the RU, in order to help the RU to implement the power saving solution.

Now, further embodiments will be described in connection with three particular situations where the DU and the RU perform their methods respectively according to the present disclosure. It can be understood that, the three particular situations are just example situations to facilitate understanding of the present disclosure, and the present disclosure may involve more situations where the DU and the RU perform their methods respectively. It will be also understood that, although specific terms are used in the embodiments, the embodiments are not limited to those specific terms but may be applied to all similar terms.

Figure 3 illustrates a first example situation where the DU and the RU perform their methods respectively according to the present disclosure. At step 301, the RU collects its real-time and non-real-time internal information (such as traffic loads, temperature, fault, and aging, etc.), generates one or more power saving strategies as recommendations to the DU based on the internal information. At step 302, the RU sends the one or more power saving strategies to the DU. At step 303, the DU receives the one or more power saving strategies, and generates a power saving solution based on the one or more power saving strategies, internal information of the DU and higher layer information. At step 304, the DU sends the power saving solution to the RU. At step 305, the RU sends an acknowledgement for the power saving solution to the DU, to demonstrate the power saving solution is correctly received by the RU. At step 306, the DU performs related power saving processing, in response to the acknowledgement from the RU. At step 307, the RU executes one or more corresponding EE functionalities based on the power saving solution. The power saving strategy may have same items as those described above in the power saving solution, for example, the power saving strategy may also include a trigger condition, a starting time, a duration, and EE function(s) to be performed, or may also include a trigger condition, a starting time, a duration, one or more domains in a plurality of domains to which EE functionalities belong, and one or more domain indicators respectively corresponding to the one or more domains. In an embodiment, the RU may further include an estimated power saving amount in the power saving strategy, and the estimated power saving amount may be considered by the DU when generating the power saving solution. Generally, several power saving strategies may be provided from the RU to the DU.

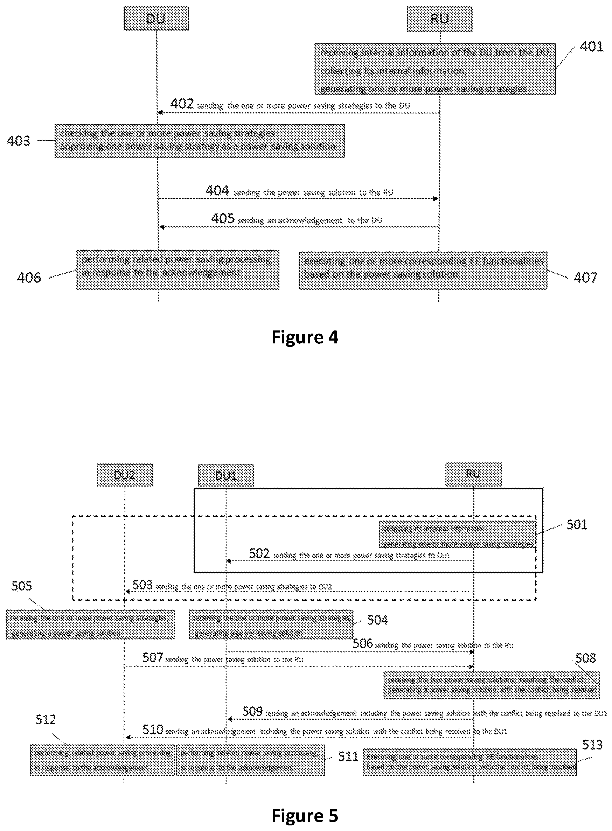

Figure 4 illustrates a second example situation where the DU and the RU perform their methods respectively according to the present disclosure. At step 401, the RU receives internal information of the DU from the DU, collects its real-time and non-real-time internal information (such as traffic loads, temperature, power class, RU fault, and aging indicator, etc.), generates one or more power saving strategies based on the internal information of the DU and the internal information of the RU. At step 402, the RU sends the one or more power saving strategies to the DU. At step 403, the DU checks the one or more power saving strategies (e.g., by simply checking whether the value of each of the items in the power saving strategy is in a valid scope or not), and approves one power saving strategy from the one or more power saving strategies as a power saving solution. At step 404, the DU sends the power saving solution to the RU. At step 405, the RU sends an acknowledgement for the power saving solution to the DU, to demonstrate the power saving solution is correctly received by the RU. At step 406, the DU performs related power saving processing, in response to the acknowledgement from the RU. At step 407, the RU executes one or more corresponding EE functionalities based on the power saving solution. The power saving strategy may have same items as those described above in the power saving solution. In an embodiment, the RU may include an estimated power saving amount in the power saving strategy, and the estimated power saving amount may be considered by the DU when making the approval.

The DU of course may generate the power saving solution without needing a power saving strategy from the RU. Hence, in another embodiment, the DU may obtain the power saving solution by receiving the internal information of the RU from the RU, and generating the power saving solution based on the internal information of the RU, the internal information of the DU, and higher layer information (this embodiment is not illustrated in a figure).

In some situations, the RU is cooperating with two or more DUs to provide radio services, and the two or more DUs may each send a power saving solution to the RU, which may cause a conflict between the two or more power saving solutions. In those situations, the conflict needs to be resolved. Figure 5 illustrates a third example situation where there are two DUs, and the DUs and the RU perform their methods respectively according to the present disclosure. In the third example situation, the RU is used to resolve the conflict. At step 501, the RU collects its real-time and non-real-time internal information (such as traffic loads, temperature, fault, and aging, etc.), generates one or more power saving strategies as recommendations to the DU. At step 502, the RU sends the one or more power saving strategies to DU1. At step 503, the RU sends the one or more power saving strategies to DU2. At step 504, DU1 receives the one or more power saving strategies, and generates a power saving solution based on the one or more power saving strategies, internal information of the DU and higher layer information. At step 505, DU2 receives the one or more power saving strategies, and also generates a power saving solution based on the one or more power saving strategies, internal information of the DU and higher layer information. At step 506, DU1 sends its power saving solution to the RU. At step 507, DU2 sends its power saving solution to the RU. At step 508, the RU receives the two power saving solutions, resolves the conflict between the two power saving solutions and generates a power saving solution with the conflict being resolved from the two power saving solutions. At step 509, the RU sends an acknowledgement including the power saving solution with the conflict being resolved to the DU1. At step 510, the RU sends an acknowledgement including the power saving solution with the conflict being resolved to DU2. At step 511, DU1 performs related power saving processing, in response to the acknowledgement from the RU, in particular, in view of the power saving solution with the conflict being resolved included in the acknowledgement. At step 512, DU2 performs related power saving processing, in response to the acknowledgement from the RU, in particular, in view of the power saving solution with the conflict being resolved included in the acknowledgement. At step 513, the RU executes one or more corresponding EE functionalities based on the power saving solution with the conflict being resolved.

Even if in the situations where the RU is cooperating with two or more DUs to provide radio services, it is possible that there is no conflict between two or more power saving solutions from the two or more DUs to the RU. In this case, the RU will not need to resolve a conflict and will send a normal acknowledgement to each of the DUs.

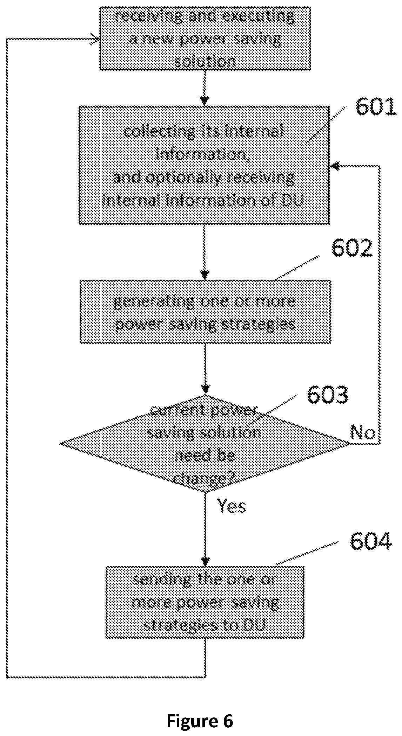

In addition, in situations where the RU generates one or more power saving strategies, the RU may repeatedly generate one or more power saving strategies regularly or irregularly, and may consider whether the current power saving solution which is being executed need be changed or not, based on the one or more power saving strategies. This process of the RU is shown in figure 6. At step 601, the RU collects its internal information, and optionally receives internal information of the DU. At step 602, the RU generates one or more power saving strategies, as described above. At step 603, the RU considers whether the current power saving solution which is being executed need be changed or not, based on the one or more power saving strategies. If the RU determines the current power saving solution need not be changed, the process goes back to step 601. If the RU determines the current power saving solution need be changed, the RU will send the one or more power saving strategies to the DU at step 604, and the DU may accordingly generate a new power saving solution as described above.

In an embodiment, the internal information of the RU includes one or more of: temperature, humidity, power class, RU fault, aging indicator, Voltage Standing Wave Ratio (VSWR), power consumption, HW configuration, software (SW) configuration, carrier configuration, connection configuration, and traffic mode.

In an embodiment, the internal information of the DU includes one or more of: network KPI, and Quality of Service (QoS).

In an embodiment, the higher layer information includes one or more: cell load, network performance, EE related thresholds and restrictions of scheduling strategy.

It is noted that, the above methods of the present disclosure could be implemented by data-driven solution of Deep Neural Network (DNN) model.

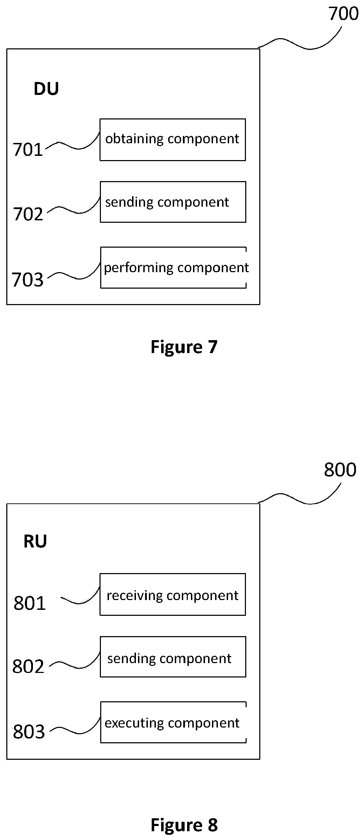

Figure 7 illustrates a schematic block diagram of a DU 700 according to the present disclosure. The DU 700 is used for reducing the power consumption of a RU, wherein the RU and the DU cooperate to provide radio services. The DU 700 may include: an obtaining component 701, for obtaining a power saving solution which is based on at least internal information of the RU and internal information of the DU; a sending component 702, for sending the power saving solution to the RU in order for the RU to execute one or more corresponding EE functionalities based on the power saving solution; and a performing component 703, for performing related power saving processing, in response to an acknowledgement for the power saving solution from the RU.

Figure 8 illustrates a schematic block diagram of a RU 800 according to the present disclosure. The RU 800 is used for reducing power consumption of the RU, wherein the RU and a DU cooperate to provide radio services. The RU 800 may include: a receiving component 801, for receiving, from the DU, a power saving solution which is based on at least internal information of the RU and internal information of the DU; and a sending component 802, for sending an acknowledgement for the power saving solution to the DU; and an executing component 803, for executing one or more corresponding EE functions based on the power saving solution

It can be appreciated that, the DU 700 and the RU 800 described herein may be implemented by various components, so that each of the DU 700 and the RU 800 implementing one or more functions described with the embodiments may comprise not only the components shown in the corresponding figure, but also other components for implementing one or more functions thereof. In addition, each of the DU 700 and the RU 800 may comprise a single component configured to perform two or more functions, or separate components for each separate function. Moreover, the components may be implemented in hardware, firmware, software, or any combination thereof.

It is understood that blocks of the block diagrams and/or flowchart illustrations, and combinations of blocks in the block diagrams and/or flowchart illustrations, may be implemented by computer program instructions. These computer program instructions may be provided to a processor of a general purpose computer, special purpose computer, and/or other programmable data processing apparatus to produce a machine, such that the instructions, which execute via the processor of the computer and/or other programmable data processing apparatus, create means for implementing the functions/acts specified in the block diagrams and/or flowchart block or blocks.

Furthermore, the solution of the present disclosure may take the form of a computer program on a memory having computer-usable or computer-readable program code embodied in the medium for use by or in connection with an instruction execution system. In the context of this document, a memory may be any medium that may contain, store, or is adapted to communicate the program for use by or in connection with the instruction execution system, apparatus, or device.

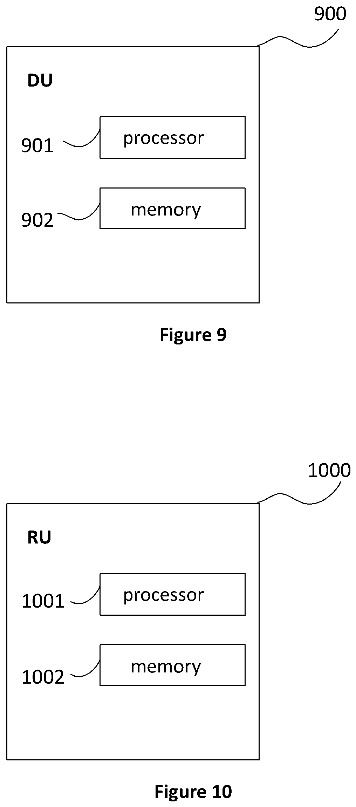

Therefore, the present disclosure also provides a DU 900 including a processor 901 and a memory 902, as shown in figure 9. In the DU 900, the memory 902 stores instructions that when executed by the processor 901 cause the DU 900 to perform the method of the DU described above with the embodiments. The present disclosure also provides a RU 1000 including a processor 1001 and a memory 1002, as shown in figure 10. In the RU 1000, the memory 1002 stores instructions that when executed by the processor 1001 cause the RU 1000 to perform the method of the RU described above with the embodiments.

The present disclosure also provides a machine readable medium (not illustrated) having stored thereon instructions that when executed on a DU cause the DU to perform the method of the DU described with the above embodiments. The present disclosure also provides a machine readable medium (not illustrated) having stored thereon instructions that when executed on a RU cause the RU to perform the method of the RU described with the above embodiments.

While this specification contains many specific implementation details, these should not be construed as limitations on the scope of any implementation or of what may be claimed, but rather as descriptions of features that may be specific to particular embodiments of particular implementations. Certain features that are described in this specification in the context of separate embodiments can also be implemented in combination in a single embodiment. Conversely, various features that are described in the context of a single embodiment can also be implemented in multiple embodiments separately or in any suitable sub-combination. Moreover, although features may be described above as acting in certain combinations and even initially claimed as such, one or more features from a claimed combination can in some cases be excised from the combination, and the claimed combination may be directed to a sub-combination or variation of a sub-combination.

It will be obvious to a person skilled in the art that, as the technology advances, the inventive concept can be implemented in various ways. The above described embodiments are given for describing rather than limiting the disclosure, and it is to be understood that modifications and variations may be resorted to without departing from the scope of the disclosure as those skilled in the art readily understand. Such modifications and variations are considered to be within the scope of the disclosure and the appended claims. The protection scope of the disclosure is defined by the accompanying claims.

## Claims

1. A method (100) performed by a Digital Unit, DU, for reducing the power consumption of a Radio Unit, RU, wherein the RU and the DU cooperate to provide radio services, the method including the following steps:
obtaining (101) a power saving solution which is based on at least internal information of the RU and internal information of the DU;
sending (102) the power saving solution to the RU in order for the RU to execute one or more corresponding Energy Efficiency, EE, functionalities based on the power saving solution; and
performing (103) related power saving processing, in response to an acknowledgement for the power saving solution from the RU;
wherein the RU is responsible for transmitting and receiving radio signals, the DU is responsible for digitally processing the radio signals.

2. The method (100) of claim 1, wherein the power saving solution includes the following items: a trigger condition, a starting time, a duration, and EE function(s) to be performed;
or wherein the power saving solution includes the following items: a trigger condition, a starting time, a duration, one or more domains in a plurality of domains to which EE functionalities belong, and one or more domain indicators respectively corresponding to the one or more domains.

3. The method (100) of claim 2, wherein the plurality of domains include a time domain, a frequency domain, a space domain, and an amplitude domain.

4. The method (100) of any one of claims 1-3, wherein the power saving solution is obtained by the following steps:
receiving one or more power saving strategies from the RU;
generating the power saving solution based on the one or more power saving strategies, the internal information of the DU, and higher layer information;
or wherein the power saving solution is obtained by the following steps:
receiving the internal information of the RU from the RU;
generating the power saving solution based on the internal information of the RU, the internal information of the DU, and higher layer information;
wherein, the higher layer information includes one or more: cell load, network performance, EE related thresholds and restrictions of scheduling strategy

5. The method (100) of any one of claims 1-3, wherein the power saving solution is obtained by the following steps:
sending the internal information of the DU to the RU;
receiving one or more power saving strategies from the RU;
approving one power saving strategy from the one or more power saving strategies as the power saving solution.

6. The method (100) of any one of claims 1-5, wherein, if the RU detects a conflict between the power saving solution and power saving solution(s) from one or more other DUs, the acknowledgement includes a power saving solution in which the RU resolves the conflict.

7. The method (100) of any one of claims 1-6, wherein the internal information of the RU includes one or more of: temperature, humidity, RU fault, aging, VSWR, power consumption, HW configuration, SW configuration, carrier configuration, connection configuration and traffic mode.

8. A method (200) performed by a Radio Unit, RU, for reducing power consumption of the RU, wherein the RU and a DU cooperate to provide radio services, the method including the following steps:
receiving (201), from the DU, a power saving solution which is based on at least internal information of the RU and internal information of the DU;
sending (202) an acknowledgement for the power saving solution to the DU; and
executing (203) one or more corresponding EE functionalities based on the power saving solution,
wherein the RU is responsible for transmitting and receiving radio signals, the DU is responsible for digitally processing the radio signals

9. The method (200) of claim 8, wherein the power saving solution includes the following items: a trigger condition, a starting time, a duration, and EE function(s) to be performed; or wherein the power saving solution includes the following items: a trigger condition, a starting time, a duration, one or more domains in a plurality of domains to which EE functionalities belong, and one or more domain indicators respectively corresponding to the one or more domains.

10. The method (200) of claim 9, wherein the plurality of domains include a time domain, a frequency domain, a space domain, and an amplitude domain.

11. The method (200) of any one of claims 8-10, wherein the method, before receiving the power saving solution, further comprises the following steps:
generating one or more power saving strategies based on the internal information of the RU;
sending the one or more power saving strategies to the DU;
or wherein the method, before receiving the power saving solution, further comprises the following steps:
receiving the internal information of the DU from the DU;
generating one or more power saving strategies based on the internal information of the DU and the internal information of the RU;
sending the one or more power saving strategies to the DU for approval by the DU;
or wherein the method, before receiving the power saving solution, further comprises the following step:
sending the internal information of the RU to the DU.

12. The method (200) of any one of claims 8-10, wherein if the RU detects a conflict between the power saving solution and power saving solution(s) from one or more other DUs, the acknowledgement includes a power saving solution in which the RU resolves the conflict.

13. The method (200) of any one of claims 8-12, wherein the internal information of the RU includes one or more of: temperature, humidity, RU fault, aging, VSWR, power consumption, HW configuration, SW configuration, carrier configuration, connection configuration and traffic mode.

14. A RU (1000) for reducing power consumption of the RU, wherein the RU and a DU cooperate to provide radio services, the RU including:
a processor (1001); and
a memory (1002), having stored instructions that when executed by the processor cause the RU to perform the method of any one of claims 8-13.

## Patentansprüche

1. Verfahren (100), das von einer digitalen Einheit, DU, durchgeführt wird, zur Verringerung des Energieverbrauchs einer Funkeinheit, RU, wobei die RU und die DU kooperieren, um Funkdienste bereitzustellen, wobei das Verfahren die folgenden Schritte umfasst:
Erhalten (101) einer Energiesparlösung, die mindestens auf internen Informationen der RU und internen Informationen der DU basiert;
Senden (102) der Energiesparlösung an die RU, damit die RU eine oder mehrere Energieeffizienzfunktionalitäten, EE-Funktionalitäten, basierend auf der Energiesparlösung ausführt; und
Durchführen (103) einer damit verbundenen Energiesparverarbeitung in Reaktion auf eine Bestätigung für die Energiesparlösung von der RU;
wobei die RU für das Senden und Empfangen von Funksignalen verantwortlich ist und die DU für die digitale Verarbeitung der Funksignale verantwortlich ist.

2. Verfahren (100) nach Anspruch 1, wobei die Energiesparlösung die folgenden Elemente umfasst: eine Auslösebedingung, eine Startzeit, eine Dauer und EE-Funktion(en), die ausgeführt werden soll(en);
oder wobei die Energiesparlösung die folgenden Elemente umfasst: eine Auslösebedingung, eine Startzeit, eine Dauer, eine oder mehrere Domänen in einer Mehrzahl von Domänen, zu denen die EE-Funktionalitäten gehören, und eine oder mehrere Domänenindikatoren, die jeweils der einen oder den mehreren Domänen entsprechen.

3. Verfahren (100) nach Anspruch 2, wobei die Mehrzahl von Domänen eine Zeitdomäne, eine Frequenzdomäne, eine Raumdomäne und eine Amplitudendomäne umfasst.

4. Verfahren (100) nach einem der Ansprüche 1 bis 3, wobei die Energiesparlösung durch die folgenden Schritte erhalten wird:
Empfangen einer oder mehrerer Energiesparstrategien von der RU;
Erstellen der Energiesparlösung basierend auf der einen oder den mehreren Energiesparstrategien, den internen Informationen der DU und Informationen der oberen Schichten;
oder wobei die Energiesparlösung durch die folgenden Schritte erhalten wird:
Empfangen der internen Informationen der RU von der RU;
Erstellen der Energiesparlösung basierend auf den internen Informationen der RU, den internen Informationen der DU und Informationen der oberen Schichten;
wobei die Informationen der oberen Schichten eines oder mehrere von Folgenden umfassen: Zelllast, Netzwerkleistung, EE-bezogene Schwellenwerte und Einschränkungen der Scheduling-Strategie.

5. Verfahren (100) nach einem der Ansprüche 1-3, wobei die Energiesparlösung durch die folgenden Schritte erhalten wird:
Senden der internen Informationen der DU an die RU;
Empfangen einer oder mehrerer Energiesparstrategien von der RU;
Genehmigen einer Energiesparstrategie aus der einen oder den mehreren Energiesparstrategien als die Energiesparlösung.

6. Verfahren (100) nach einem der Ansprüche 1-5, wobei, falls die RU einen Konflikt zwischen der Energiesparlösung und einer oder mehrerer Energiesparlösung(en) von einer oder mehreren anderen DUs erkennt, die Bestätigung eine Energiesparlösung umfasst, in der die RU den Konflikt löst.

7. Verfahren (100) nach einem der Ansprüche 1-6, wobei die internen Informationen der RU eines oder mehrere von Folgenden umfassen: Temperatur, Luftfeuchtigkeit, RU-Fehler, Alterung, VSWR, Energieverbrauch, HW-Konfiguration, SW-Konfiguration, Trägerkonfiguration, Verbindungskonfiguration und Verkehrsmodus.

8. Verfahren (200), das von einer Funkeinheit, RU, durchgeführt wird, zur Verringerung des Energieverbrauchs der RU, wobei die RU und eine DU kooperieren, um Funkdienste bereitzustellen, wobei das Verfahren die folgenden Schritte umfasst:
Empfangen (201) einer Energiesparlösung, die mindestens auf internen Informationen der RU und internen Informationen der DU basiert, von der DU;
Senden (202) einer Bestätigung für die Energiesparlösung an die DU; und
Ausführen (203) einer oder mehrerer entsprechender EE-Funktionalitäten basierend auf der Energiesparlösung,
wobei die RU für das Senden und Empfangen von Funksignalen verantwortlich ist und die DU für die digitale Verarbeitung der Funksignale verantwortlich ist.

9. Verfahren (200) nach Anspruch 8, wobei die Energiesparlösung die folgenden Elemente umfasst: eine Auslösebedingung, eine Startzeit, eine Dauer und EE-Funktion(en), die ausgeführt werden soll(en); oder oder wobei die Energiesparlösung die folgenden Elemente umfasst: eine Auslösebedingung, eine Startzeit, eine Dauer, eine oder mehrere Domänen in einer Mehrzahl von Domänen, zu denen die EE-Funktionalitäten gehören, und eine oder mehrere Domänenindikatoren, die jeweils der einen oder den mehreren Domänen entsprechen.

10. Verfahren (200) nach Anspruch 9, wobei die Mehrzahl von Domänen eine Zeitdomäne, eine Frequenzdomäne, eine Raumdomäne und eine Amplitudendomäne umfasst.

11. Verfahren (200) nach einem der Ansprüche 8-10, wobei das Verfahren vor dem Empfangen der Energiesparlösung ferner die folgenden Schritte umfasst:
Erstellen einer oder mehrerer Energiesparstrategien basierend auf den internen Informationen der RU;
Senden der einen oder der mehreren Energiesparstrategien an die DU;
oder wobei das Verfahren vor dem Empfangen der Energiesparlösung ferner die folgenden Schritte umfasst:
Empfangen der internen Informationen der DU von der DU;
Erstellen einer oder mehrerer Energiesparstrategien basierend auf den internen Informationen der DU und den internen Informationen der RU;
Senden der einen oder der mehreren Energiesparstrategien zur Genehmigung durch die DU an die DU;
oder wobei das Verfahren vor dem Empfangen der Energiesparlösung ferner den folgenden Schritt umfasst:
Senden der internen Informationen der RU an die DU.

12. Verfahren (200) nach einem der Ansprüche 8-10, wobei, falls die RU einen Konflikt zwischen der Energiesparlösung und einer oder mehrerer Energiesparlösung(en) von einer oder mehreren anderen DUs erkennt, die Bestätigung eine Energiesparlösung umfasst, in der die RU den Konflikt löst.

13. Verfahren (200) nach einem der Ansprüche 8-12, wobei die internen Informationen der RU eines oder mehrere von Folgenden umfassen: Temperatur, Luftfeuchtigkeit, RU-Fehler, Alterung, VSWR, Energieverbrauch, HW-Konfiguration, SW-Konfiguration, Trägerkonfiguration, Verbindungskonfiguration und Verkehrsmodus.

14. RU (1000) zum Verringern des Energieverbrauchs der RU, wobei die RU und eine DU kooperieren, um Funkdienste bereitzustellen, wobei die RU Folgendes umfasst:
einen Prozessor (1001); und
einen Speicher (1002) mit gespeicherten Anweisungen, die bei Ausführung durch den Prozessor die RU zum Durchführen des Verfahrens nach einem der Ansprüche 8-13 veranlassen.

## Revendications

1. Procédé (100) réalisé par une unité numérique, DU, pour réduire la consommation d'énergie d'une unité radio, RU, dans lequel la RU et la DU coopèrent pour fournir des services radio, le procédé incluant les étapes suivantes :
l'obtention (101) d'une solution d'économie d'énergie qui est basée sur au moins des informations internes de la RU et des informations internes de la DU ;
l'envoi (102) de la solution d'économie d'énergie à la RU pour que la RU exécute une ou plusieurs fonctionnalités d'efficacité énergétique, EE, correspondantes sur la base de la solution d'économie d'énergie ; et
la réalisation (103) d'un traitement d'économie d'énergie lié, en réponse à un acquittement pour la solution d'économie d'énergie depuis la RU ;
dans lequel la RU est responsable de la transmission et de la réception de signaux radio, la DU est responsable du traitement numérique des signaux radio.

2. Procédé (100) selon la revendication 1, dans lequel la solution d'économie d'énergie inclut les éléments suivants : une condition de déclenchement, un temps de début, une durée et une ou plusieurs fonctions EE à réaliser ;
ou dans lequel la solution d'économie d'énergie inclut les éléments suivants : une condition de déclenchement, un temps de début, une durée, un ou plusieurs domaines parmi une pluralité de domaines auxquels appartiennent des fonctionnalités EE, et un ou plusieurs indicateurs de domaine correspondant respectivement aux un ou plusieurs domaines.

3. Procédé (100) selon la revendication 2, dans lequel la pluralité de domaines inclut un domaine de temps, un domaine de fréquence, un domaine d'espace et un domaine d'amplitude.

4. Procédé (100) selon l'une quelconque des revendications 1 à 3, dans lequel la solution d'économie d'énergie est obtenue par les étapes suivantes :
la réception d'une ou plusieurs stratégies d'économie d'énergie depuis la RU ;
la génération de la solution d'économie d'énergie sur la base des une ou plusieurs stratégies d'économie d'énergie, des informations internes de la DU et d'informations de couche supérieure ;
ou dans lequel la solution d'économie d'énergie est obtenue par les étapes suivantes :
la réception des informations internes de la RU depuis la RU ;
la génération de la solution d'économie d'énergie sur la base des informations internes de la RU, des informations internes de la DU et d'informations de couche supérieure ;
dans lequel les informations de couche supérieure incluent un ou plusieurs parmi : une charge de cellule, une performance de réseau, des seuils liés à l'EE et des restrictions de stratégie de planification.

5. Procédé (100) selon l'une quelconque des revendications 1 à 3, dans lequel la solution d'économie d'énergie est obtenue par les étapes suivantes :
l'envoi des informations internes de la DU à la RU ;
la réception d'une ou plusieurs stratégies d'économie d'énergie depuis la RU ;
l'approbation d'une stratégie d'économie d'énergie parmi les une ou plusieurs stratégies d'économie d'énergie en tant que la solution d'économie d'énergie.

6. Procédé (100) selon l'une quelconque des revendications 1 à 5, dans lequel, si la RU détecte un conflit entre la solution d'économie d'énergie et une ou plusieurs solutions d'économie d'énergie d'une ou plusieurs autres DU, l'acquittement inclut une solution d'économie d'énergie dans laquelle la RU résout le conflit.

7. Procédé (100) selon l'une quelconque des revendications 1 à 6, dans lequel les informations internes de la RU incluent un ou plusieurs parmi : une température, une humidité, un défaut de RU, un vieillissement, un VSWR, une consommation d'énergie, une configuration matérielle, une configuration logicielle, une configuration de porteuse, une configuration de connexion et un mode de trafic.

8. Procédé (200) réalisé par une unité radio, RU, pour réduire la consommation d'énergie da la RU, dans lequel la RU et la DU coopèrent pour fournir des services radio, le procédé incluant les étapes suivantes :
la réception (201), depuis la DU, d'une solution d'économie d'énergie qui est basée sur au moins des informations internes de la RU et des informations internes de la DU ;
l'envoi (202) d'un acquittement pour la solution d'économie d'énergie à la DU ; et
l'exécution (203) d'une ou plusieurs fonctionnalités EE correspondantes sur la base de la solution d'économie d'énergie,
dans lequel la RU est responsable de la transmission et de la réception de signaux radio, la DU est responsable du traitement numérique des signaux radio.

9. Procédé (200) selon la revendication 8, dans lequel la solution d'économie d'énergie inclut les éléments suivants : une condition de déclenchement, un temps de début, une durée et une ou plusieurs fonctions EE à réaliser ; ou
dans lequel la solution d'économie d'énergie inclut les éléments suivants : une condition de déclenchement, un temps de début, une durée, un ou plusieurs domaines parmi une pluralité de domaines auxquels appartiennent des fonctionnalités EE, et un ou plusieurs indicateurs de domaine correspondant respectivement aux un ou plusieurs domaines.

10. Procédé (200) selon la revendication 9, dans lequel la pluralité de domaines inclut un domaine de temps, un domaine de fréquence, un domaine d'espace et un domaine d'amplitude.

11. Procédé (200) selon l'une quelconque des revendications 8 à 10, dans lequel le procédé, avant la réception de la solution d'économie d'énergie, comprend en outre les étapes suivantes :
la génération d'une ou plusieurs stratégies d'économie d'énergie sur la base des informations internes de la RU ;
l'envoi des une ou plusieurs stratégies d'économie d'énergie à la DU ;
ou dans lequel le procédé, avant la réception de la solution d'économie d'énergie, comprend en outre les étapes suivantes :
la réception des informations internes de la DU depuis la DU ;
la génération d'une ou plusieurs stratégies d'économie d'énergie sur la base des informations internes de la DU et des informations internes de la RU ;
l'envoi des une ou plusieurs stratégies d'économie d'énergie à la DU pour approbation par la DU ;
ou dans lequel
le procédé, avant la réception de la solution d'économie d'énergie, comprend en outre l'étape suivante :
l'envoi des informations internes de la RU à la DU.

12. Procédé (200) selon l'une quelconque des revendications 8 à 10, dans lequel, si la RU détecte un conflit entre la solution d'économie d'énergie et une ou plusieurs solutions d'économie d'énergie d'une ou plusieurs autres DU, l'acquittement inclut une solution d'économie d'énergie dans laquelle la RU résout le conflit.

13. Procédé (200) selon l'une quelconque des revendications 8 à 12, dans lequel les informations internes de la RU incluent un ou plusieurs parmi : une température, une humidité, un défaut de RU, un vieillissement, un VSWR, une consommation d'énergie, une configuration matérielle, une configuration logicielle, une configuration de porteuse, une configuration de connexion et un mode de trafic.

14. RU (1000) pour réduire une consommation d'énergie de la RU, dans laquelle la RU et une DU coopèrent pour fournir des services radio, la RU incluant :
un processeur (1001) ; et
une mémoire (1002) sur laquelle sont stockées des instructions qui, lorsqu'elles sont exécutées par le processeur, amènent la RU à réaliser le procédé selon l'une quelconque des revendications 8 à 13.
